# EUROPÄISCHE PATENTSCHRIFT

(11) **EP 4 482 771 B1**
(45) Veröffentlichungstag und Bekanntmachung des Hinweises auf die Patenterteilung: **31.12.2025**
(21) Anmeldenummer: 23709100.4
(22) Anmeldetag: 23.02.2023
(51) Int. Cl.: B65G 65/00, B65G 47/96, B65G 69/16

(54) **ANORDNUNG UND VERFAHREN FÜR DIE EINFÜHRUNG EINES ROLLBEHÄLTERS IN EINE ROLLBEHÄLTERBELADESTATION**
ARRANGEMENT AND METHOD FOR INTRODUCING A ROLL CONTAINER INTO A ROLL CONTAINER LOADING STATION
ENSEMBLE ET PROCÉDÉ D'INSERTION D'UN CONTENEUR ROULANT DANS UN POSTE DE CHARGEMENT DE CONTENEURS ROULANTS

(30) Priorität: 25.02.2022 DE 102022104554
(43) Veröffentlichungstag der Anmeldung: 01.01.2025
(73) Patentinhaber: BEUMER Group GmbH & Co. KG, 59269 Beckum (DE)
(72) Erfinder: NEUMANN, Nils, 33378 Rheda-Wiedenbrück (DE); JESPER, Jan Josef, 33129 Delbrück (DE); HANSEN, Brian, 9270 Klarup (DK)
(74) Vertreter: Novagraaf Group
(86) Internationale Anmeldenummer: PCT/DE2023/100144
(87) Internationale Veröffentlichungsnummer: WO 2023/160756

(56) Entgegenhaltungen:
- EP-A1- 2 450 112
- EP-A1- 3 061 712
- EP-B1- 2 686 260
- WO-A1-2020/171859
- WO-A1-2020/242695
- CN-A- 111 071 708
- DE-A1- 102010 060 483
- FR-A1- 2 490 197
- JP-A- 2020 027 321
- US-A1- 2001 053 320
- US-A1- 2020 079 602
- US-B1- 8 556 084

## Beschreibung

Die Erfindung betrifft eine Anordnung und ein Verfahren für die Einführung eines Rollbehälters in eine Rollbehälterbeladestation, insbesondere zur Befüllung des Rollbehälters, welcher beispielsweise ein Speditionsbehälter oder Zwischenbehälter ist, mit sortierten Packstücken in einem Logistikzentrum, wobei die Anordnung ein Transportsystem für den Transport von Rollbehältern aufweist. Das Transportsystem verbindet eine Annahmestelle für leere Rollbehälter mit einer Rollbehälterbeladestation. Ferner weist das Transportsystem eine Endposition für mit dem Transportsystem transportierte Rollbehälter in einer Beladeposition des Rollbehälters im Innern der Rollbehälterbeladestation und die Anordnung ein Sensorsystem auf, mit dem in der Beladeposition des Rollbehälters im Innern der Rollbehälterbeladestation mindestens eine relative Position zwischen dem Rollbehälter und mindestens einem Bezugspunkt im Innern der Rollbehälterbeladestation bestimmt ist. Eine derartige Anordnung ist aus der DE 10 2010 060 483 A1 bekannt. Weitere Anordnungen sind außerdem bekannt aus den Druckschriften US 2001/053320 A1, US 8 556 084 B1, WO 2020/242695 A1, US 2020/079602 A1, CN 111 071 708 A, JP 2020 027321 A, WO 2020/171859 A1, FR 2 490 197 A1 und EP 3 061 712. Eine Anordnung mit einem auf einem Schienensystem basierenden Transportsystem ist ferner aus der EP 3 383 745 A1 bekannt. Die DE 10 2010 060483 A1 offenbart eine Anordnung nach dem Oberbegriff des Anspruchs 1.

Derartige Anordnungen und Verfahren für die Einführung von Rollbehältern in Rollbehälterbeladestationen finden insbesondere in KEP-Bereich Anwendung, beispielsweise, wenn von einem Sorter, etwa einem Liegesorter, vorsortierte Sendungen, die in Pufferspeichern vorgehalten werden, für den Weitertransport in Rollbehälter umgeladen werden müssen. Weitere Rollbehälterbeladestationen sind aus der EP 2 686 260 B1 und aus der EP 2 450 112 A1 bekannt.

Die aus dem Stand der Technik bekannten Anordnungen und Verfahren für die Einführung eines Rollbehälters in eine Rollbehälterbeladestation haben den Nachteil, dass die verwendeten Transportsysteme die Rollbehälter nur bis vor einen Eingang der Rollbehälterbeladestation befördern und das Einführen des Rollbehälters in die Rollbehälterbeladestation manuell unterstützt erfolgen muss, oder dass ein vergleichsweise aufwendiges Schienensystem verwendet wird, um den Rollbehälter bis in eine Beladeposition im Innern der Rollbehälterbeladestation zu transportieren. Das Schienensystem hat dabei insbesondere die Funktion, auf dem allerletzten Teilabschnitt des Transportsystems in die Rollbehälterbeladestation hinein eine präzise Führung und Positionierung des Rollbehälters in Bezug auf die Rollbehälterbeladestation sicherzustellen, um das nachfolgende Beladen des Rollbehälters prozesssicher zu ermöglichen.

Es ist daher die Aufgabe der Erfindung, eine Anordnung und ein entsprechendes Verfahren für die Einführung eines Rollbehälters in eine Rollbehälterbeladestation vorzuschlagen, welche unter Beibehaltung der Präzision zwangsgeführter Transportsysteme auf derartige Systeme verzichtet.

Diese Aufgabe wird durch eine Anordnung mit den Merkmalen des Anspruchs 1 gelöst.

Der nebengeordnete Anspruch 12 betrifft ein entsprechendes Verfahren. Die abhängigen Ansprüche betreffen jeweils vorteilhafte Ausführungsformen der Erfindung.

Demgemäß ist vorgesehen, dass das Sensorsystem für die Bestimmung der Relativposition mindestens einen Positionssensor oberhalb von der Rollbehälterbeladestation aufweist, wobei eine Standfläche für einen Rollbehälter an der Beladeposition im Innern der Rollbehälterbeladestation im Messbereich des Positionssensors bzw. im Bildfeld der optischen Kamera liegt, die im Kopfbereich der Rollbehälterbeladestation angeordnet ist, und der Bezugspunkt eine innere Begrenzung eines Rollbehälteraufnahmeraums der Rollbehälterbeladestation ist, vorzugsweise eine Außenwand oder ein Rahmengestell des Rollbehälteraufnahmeraums.. Die von dem Sensorsystem erfasste Relativposition des Rollbehälters in Bezug auf die Rollbehälterbeladestation kann dazu verwendet werden, um eine Aktorik des Transportsystems anzusteuern. Die Aktorik kann beispielsweise eine Lenkung eines Transportfahrzeugs des Transportsystems sein oder aufweisen. Das Transportfahrzeug kann ein fahrerloses Transportsystem (FTS) sein. Die Verwendung des Sensorsystems ermöglicht es somit, auf zwangsgeführte Transportsysteme für den Transport von Rollbehältern zu verzichten.

Es kann somit vorgesehen sein, dass das Transportsystem dazu eingerichtet ist, den zu befüllenden Rollbehälter von der Annahmestelle bis in die finale Beladeposition der Rollbehälterbeladestation im Innern dieser zu befördern, sodass kein weiterer, insbesondere manueller, Eingriff erforderlich ist. Damit werden Ausführungsformen ermöglicht, bei denen die Zuführung des leeren Rollbehälters zu der Rollbehälterbeladestation einschließlich der Positionierung des Rollbehälters in der Beladeposition vollautomatisch ausführbar ist. Wenn darüber hinaus die Rollbehälterbeladestation beispielsweise gemäß einer Ausführungsform der in der nachveröffentlichten europäischen Patentanmeldung 21159642.4 ausgebildet ist, kann die Zuführung des leeren Rollbehälters zu der Rollbehälterbeladestation einschließlich des Befüllens des Rollbehälters vollautomatisch ausgeführt werden. Das beschriebene Sensorsystem kann dann weiterhin dazu eingerichtet sein, um den befüllten Rollbehälter prozesssicher wieder aus der Rollbehälterbeladestation heraus zu transportieren und beispielsweise einem Transportfahrzeug für Rollbehälter, wie diese in KEP-Bereich üblich sind, zuzuführen und das Fahrzeug mit dem befüllten Rollbehälter zu beladen. Schließlich kann das Transportsystem dazu eingerichtet sein, an seiner Annahmestelle die Rollbehälter von einer Sammelstelle für leere Rollbehälter abzunehmen und der Annahmestelle für den Transport zu der Rollbehälterbeladestation zuzuführen. Dazu kann das Transportsystem dazu eingerichtet sein, die leeren Rollbehälter an der Sammelstelle miteinander zu verbinden, aufzureihen und/oder zusammenzufalten beziehungsweise vor der Überführung an der Annahmestelle wieder aufzufalten und/oder voneinander zu trennen. Die Rollbehälter können als Behälter mit festen Wänden oder auch als Behälter mit einem darin aufgehängten Sack ausgebildet sein. Alternativ können die Behälter auch ohne Rollen ausgeführt sein.

Die optische Kamera kann eine optische Achse aufweisen, die sich in Vertikalrichtung oder unter einem spitzen Winkel zur Vertikalrichtung erstreckt.

Wenn das Transportsystem ein Transportfahrzeug, vorzugsweise ein fahrerloses Transportfahrzeug (FTS) aufweist, kann das Sensorsystem für die Bestimmung der Relativposition mindestens einen Positionssensor aufweisen. Das Sensorsystem für die Bestimmung der Relativposition kann auch ausschließlich Bestandteil des fahrerlosen Transportfahrzeugs (FTS) sein. Die Bestimmung der Relativposition kann die Bestimmung mindestens einer Absolutposition aufweisen, die Führung über eine Laserpositionierung, die Erkennung mindestens eines QR-Codes, oder eine induktive, Magnetführung (Spot oder Line) sein, oder eine simultane Positionsbestimmung und Kartierung (SLAM). Das Sensorsystem für die Bestimmung der Relativposition kann ein akustisches Sensorsystem oder ein anderes aus dem Stand der Technik bekanntes System für die Positionsbestimmung aufweisen, etwa ein Lidar-System, eine Time-of-Flight(ToF)-System, ein Ultraschall-System, mindestens einen RFID-Sensor oder ein System zur Echtzeit-Lokalisierung mittels der Ultra-Breitband-Technologie (UWB). Das Sensorsystem für die Bestimmung der Relativposition soll jedoch nicht auf diese Ausführungsformen beschränkt sein.

Das Sensorsystem kann weiterhin dazu eingerichtet sein, zu erfassen, ob sich Personen oder Gegenstände, insbesondere Pakete und/oder Personen, im Umfeld der Rollbehälterbeladestation bzw. in dem Rollbehälter befinden.

Das Sensorsystem, insbesondere die optische Kamera, kann dazu eingerichtet sein, eine Standfläche des Rollbehälters im Innern der Rollbehälterbeladestation zu erfassen.

Die optische Kamera oder das Sensorsystem weist ein Bildverarbeitungssystem auf, welches beispielsweise eine Kantenerkennung aufweisen kann und dazu eingerichtet ist, bei einem in einer Beladeposition im Innern der Rollbehälterbeladestation angeordneten Rollbehälter mindestens einen relativen Abstand zwischen dem Rollbehälter und mindestens einem Bezugspunkt im Innern der Rollbehälterbeladestation zu bestimmen. Vorzugsweise kann der Bezugspunkt an einer Außenwand beziehungsweise dem Rahmengestell angeordnet sein. Der Bezugspunkt ist nicht zwingend ein Punkt im geometrischen Sinne. Vielmehr kann auch eine Fläche oder eine andere charakteristische Geometrie mit zweidimensionaler oder dreidimensionaler Erstreckung sein. Die Rollbehälterbeladestation kann einen Rollbehälteraufnahmeraum mit einem Eingang für einen Rollbehälter aufweisen. Der Eingang kann einen Lichtvorhang aufweisen, der dazu eingerichtet ist, das Einfahren eines Rollbehälters durch den Eingang in den Rollbehälteraufnahmeraum zu erfassen. Die Maßnahme dient einerseits der Erkennung der relativen Anordnung des Rollbehälters in Bezug auf die Rollbehälterbeladestation und kann auch weiterhin dazu verwendet werden, um sicherzustellen, dass beispielsweise während eines Beladevorgangs, bei der ein Beladeschacht in den Rollbehälter abgesenkt wird, keine Störkontur oder eine Person im Eingangsbereich der Rollbehälterbeladestation angeordnet ist, welche bei dem Beladevorgang mit dem sich absenkenden Schacht oder der dazu erforderlichen Kinematik der Rollbehälterbeladestation kollidiert.

Der Lichtvorhang kann dazu eingerichtet sein, das vollständige Einfahren des Rollbehälters durch den Eingang in den Rollbehälteraufnahmeraum zu erfassen. Zu diesem Zwecke kann der Lichtvorhang als eine Lichtschranke ausgebildet sein, die lediglich aus der Unterbrechung des Lichtwegs auf das Vorhandensein einer Störkontur, beispielsweise eines Rollbehälters schließt. Zusätzlich kann der Lichtvorhang dazu eingerichtet sein, beim Einfahren des Rollbehälters durch den Eingang in den Rollbehälteraufnahmeraum die Außengeometrie des Rollbehälters abzutasten und dabei vorzugsweise mindestens eines von Höhe, Breite, Tiefe und Aufstandsfläche des Rollbehälters zu erfassen.

Der Rollbehälteraufnahmeraum der Rollbehälterbeladestation kann mindestens ein mechanisches Führungselement aufweisen, mit dem der Rollbehälter dann beim Eintreten in den Rollbehälteraufnahmeraum in eine Beladeposition des Rollbehälters im Innern der Rollbehälterbeladestation geführt ist. Das mechanische Führungselement kann beispielsweise als mindestens eine Führungsschiene ausgebildet sein und die Führungsschienen können in einem Zuführbereich für Rollcontainer vor dem Eingang des Rollbehälteraufnahmeraums und/oder im Innern des Rollbehälteraufnahmeraums angeordnet sein. Das mechanische Führungselement kann die Funktion aufweisen, den Rollcontainer prozesssicher durch den Eingang in den Rollbehälteraufnahmeraum einzuführen und/oder den Rollbehälter in der Beladeposition zu positionieren.

Für die prozesssichere Positionierung des Rollbehälters in der Beladeposition kann der Rollbehälter in der Beladeposition an einem Anschlag anliegen. Der Anschlag kann Bestandteil des mechanischen Führungselements sein. Mit dem Anschlag ist die Bewegung des Rollbehälters in Einschubrichtung des Rollbehälters durch den Eingang des Rollbehälteraufnahmeraums in den Rollbehälteraufnahmeraum hinein begrenzt.

Das Transportsystem kann ein fahrerloses Transportsystem sein (FTS) sein oder aufweisen. Das fahrerlose Transportsystem kann dazu eingerichtet sein, einen Rollbehälter an der Annahmestelle für leere Rollbehälter anzunehmen und in einen Rollbehälteraufnahmeraum der Rollbehälterbeladestation einzuführen.

Es kann vorgesehen sein, dass eine mechanische Kopplung zwischen dem fahrerlosen Transportsystem und dem Rollbehälter durch einen Hubmechanismus und/oder durch eine reibschlüssige Verbindung und/oder durch ineinandergreifende Formkonturen des fahrerlosen Transportsystems und des Rollbehälters erfolgt. Bei Verwendung eines fahrerlosen Transportsystems, beispielsweise realisiert durch Verwendung einer Mehrzahl AGVs, kann der erfindungsgemäße (Roll)Behälter selbst auch ohne Rollen ausgebildet sein. Seine Eigenschaft als Rollbehälter erhält er dabei durch die Verbindung mit dem AGV im Zuge des Transports, insbesondere zwischen der Annahmestelle und der Rollbehälterbeladestation. Der AGV taugliche Rollbehälter kann eine Mehrzahl Stelzen aufweisen, welche eine Transportebene des Behälters vom Boden beabstanden, wobei der durch die Stelzen bereitgestellte Raum so bemessen sein kann, dass ein AGV unter die Transportebene des Behälters fahren kann. Zum Transportieren kann das AGV eine Hubeinheit aufweisen, mittels welcher der Behälter angehoben werden kann. Der Behälter weist an seiner Oberseite eine Beladeöffnung auf, über welche Paketstücke oder sonstige zu verladende Artikel in den Behälter geladen werden können. Die durch die Stelzen bereitgestellte Aufstandsfläche kann größer sein als ein Querschnitt des Behälters. Dadurch kann ein Umkippen des Behälters während des Handlings vermieden werden. Zwischen der Transportebene und einer Unterseite des Behälterraums kann ein Freiraum vorgesehen sein. Dieser kann dazu dienen, den Behälter mittels einer Hubvorrichtung, beispielsweise in einer Entladestation, vom AGV abzunehmen und auf eine Entladehöhe zu bringen. Die Hubvorrichtung kann beispielsweise Gabelzinken aufweisen, welche in den Freiraum eingreifen können. Der Behälter kann eine seitliche Entladeklappe aufweisen, welche an einem oberen Rand einer der Behälterwände anscharniert sein kann, so dass die Entladeklappe um eine horizontale Achse nach oben aufgeschwenkt werden kann. Der Behälterboden kann eine in Richtung der Entladeklappe ausgerichtete Schräge aufweisen, beispielsweise zwischen 20 und 30 Grad, so dass beim Öffnen der Entladeöffnung im Behälter befindliche Pakete automatisch aus dem Behälter rutschen können.

Ferner kann eine entsprechende Entladestation vorgesehen sein. Diese kann ein Rahmengestell aufweisen, in welchem eine Parkposition für ein mit einem Behälter beladenes AGV vorgesehen sein kann. Ferner kann die Entladestation eine Hubvorrichtung aufweisen, mittels welcher der Behälter vom AGV angehoben werden kann. Das Rahmengestell kann eine Einfahrseite aufweisen, über welche das AGV in die Parkposition hineinfahren kann. Die Hubvorrichtung kann der Einfahrseite gegenüberliegend angeordnet sein und während des Einfahrens des AGVs in eine entsprechende Aufnahmeausrichtung gebracht sein, dass die Gabelzinken der Hubvorrichtung im Zuge des Hineinfahrens des AGVs in die Parkposition in den Freiraum des Behälters eingreifen. Dadurch kann vorteilhaft erreicht werden, dass das AGV für das Anheben des Behälters in die Entladeposition bzw. für den Entladevorgang nicht weggefahren werden muss. Die Entladestation kann eine Bedieneinrichtung aufweisen, mittels welcher ein Bediener den Behälter manuell vertikal verfahren kann. Die Entladestation kann ferner eine Sacktrageeinrichtung aufweisen, an welcher ein Sack oder ein anderes geeignetes Behältnis zum Aufnehmen der Pakete aus dem Behälter aufgehängt werden kann. Der Sack kann dabei so aufgehängt werden, dass dieser an einen unteren Rand der Entladeöffnung des Behälters angrenzt. Zum Umfüllen der Pakete aus dem Behälter in den Sack muss nun lediglich die Entladeklappe aufgeschwenkt werden, so dass die im Behälter befindlichen Pakete über den angeschrägten Behälterboden in den Sack rutschen. Danach kann der Behälter wieder auf das AGV abgesenkt werden, welches anschließend an eine freie Entladeposition längs des Sorters verfahren wird.

Das fahrerlose Transportsystem kann das Sensorsystem oder mindestens einen Sensor des Sensorsystems, vorzugsweise mindestens eine optische Kamera aufweisen. Das Sensorsystem kann dazu eingerichtet sein, beim Einfahren des Rollbehälters in den Rollbehälteraufnahmeraum kontinuierlich oder periodisch eine Relativposition des Rollbehälters in Bezug auf die Rollbehälterbeladestation zu bestimmen. Alternativ kann die Rollbehälterbeladestation ein Sensorsystem aufweisen, welches dazu eingerichtet ist, die Relativanordnung des Rollbehälters in Bezug auf die Rollbehälterbeladestation zu bestimmen. Dazu kann vorgesehen sein, dass das fahrerlose Transportsystem mindestens einen optisch erfassbaren Indikator, beispielsweise ein mehrdimensionales Farbmuster oder eine dreidimensionale Geometrie aufweist, die von der optischen Kamera mittels Bildverarbeitung erfasst ist, und aus der auf die Position und relative Ausrichtung des fahrerlosen Transportsystems geschlossen werden kann.

Die unmittelbare Umgebung der Rollbehälterbeladestation, vorzugsweise mindestens ein Eingangsbereich vor einem Eingang in einen Rollbehälteraufnahmeraum der Rollbehälterbeladestation, kann von einer Sicherheitseinrichtung auf das Vorhandensein von Personen oder Gegenständen überwacht sein. Dies ermöglicht es, dass abweichend von den aus dem Stand der Technik bekannten Rollbehälterbeladestationen der Eingang des Rollbehälteraufnahmeraums permanent offen und vorzugsweise frei von einem Verschließelement beispielsweise frei von einem Rolltor, ausgeführt sein kann. Die Verschließelemente, insbesondere die genannten Rolltore, sind bei den aus dem Stand der Technik bekannten Beladestation aufgrund der manuellen Positionierung der Rollbehälter im Innern des Rollbehälteraufnahmeraums der Rollbehälterbeladestation erforderlich, um eine versehentliche Kollision einer Person mit beispielsweise einem sich absenkenden Schacht beim Befüllen des Rollbehälters zu vermeiden.

Gemäß einem anderen Aspekt der Erfindung wird ein Verfahren für die Einführung eines Rollbehälters in eine Rollbehälterbeladestation beschrieben. Die zuvor beschriebene Anordnung wird zur Ausführung des Verfahrens angewendet.

Demgemäß ist bei dem Verfahren vorgesehen, dass der Rollbehälter mit einem Transportsystem zwischen einer Annahmestelle für leere Rollbehälter und einer Rollbehälterbeladestation transportiert wird. Dabei wird eine Relativposition des Rollbehälters in Bezug auf die Rollbehälterbeladestation mit einem Sensorsystem bestimmt, wodurch die erfindungsgemäß angestrebte präzise Führung des Rollbehälters in Bezug auf die Rollbehälterbeladestation ohne die Verwendung einer Zwangsführung erreicht wird.

Mit dem Sensorsystem kann in einer Beladeposition des Rollbehälters im Innern der Rollbehälterbeladestation mindestens eine relativer Abstand zwischen dem Rollbehälter und mindestens einem Bezugspunkt im Innern der Rollbehälterbeladestation bestimmt werden.

Das Einfahren eines Rollbehälters durch einen Eingang der Rollbehälterbeladestation in einen Rollbehälteraufnahmeraum der Rollbehälterbeladestation kann dadurch erfasst werden, dass bei dem Einfahren des Rollbehälters durch den Eingang ein Lichtvorhang des Eingangs durchfahren und damit durchbrochen wird. Dabei kann das vollständige Einfahren des Rollbehälters durch den Eingang in den Rollbehälteraufnahmeraum mit dem Lichtvorhang beispielsweise dadurch erfasst werden, dass nach der erstmaligen Unterbrechung des Lichtvorhangs über eine erwartete Höhe eines Rollbehälters der Lichtvorhang wieder geschlossen wird. Alternativ oder zusätzlich kann bei dem Einfahren des Rollbehälters durch den Eingang in den Rollbehälteraufnahmeraum eine Außengeometrie des Rollbehälters mit dem Lichtvorhang abgetastet werden, wobei vorzugsweise mindestens eines von Höhe, Breite, Tiefe und Aufstandsfläche des Rollbehälters bestimmt wird.

Ein fahrerloses Transportsystem des Transportsystems kann einen Rollbehälter an der Annahmestelle für leere Rollbehälter annehmen, und dazu zum Beispiel aufnehmen und/oder anheben, von der Annahmestelle zu der Rollbehälterbeladestation transportieren und in einen Rollbehälteraufnahmeraum der Rollbehälterbeladestation einführen.

Das Sensorsystem kann zumindest beim Einführen des Rollbehälters in den Rollbehälteraufnahmeraum mit dem fahrerlosen Transportsystem kontinuierlich oder periodisch eine Relativposition des Rollbehälters in Bezug auf die Rollbehälterbeladestation bestimmen.

Das Verfahren kann ferner vorsehen, dass während eines Beladevorgangs des Rollbehälters mit Packstücken entweder
a. der zu beladene Rollbehälter in einer zur Vertikalen geneigten Position gehalten oder aus dieser Position in eine aufrechte Position geschwenkt wird, wobei der vertikale Abstand zwischen einer Einfüllöffnung des Rollbehälters und einem Boden des Rollbehälters kontinuierlich oder schrittweise vergrößert wird, oder
b. ein höhenverstellbarer Schacht der Rollbehälterbeladestation mit dem sortierten Stückgut befüllt und in dem zu beladenen Rollbehälter abgesenkt wird, und wobei das sortierte Stückgut aus dem Schacht in den Rollbehälter entleert wird, wenn der Schacht infolge des Absenkens eine untere Position erreicht hat, oder
c. der kompakte Stückgutstrom von einem Zuführförderer einer Förderstrecke einer Stückgutsammelstelle zugeführt wird, von welcher die Stückgüter des Stückgutstroms von einem Roboter in den Rollbehälter dosiert werden.

Das fahrerlose Transportsystem kann während des Beladevorgangs mit dem Rollbehälter gekoppelt bleiben, wenn dieser während des Beladens nicht verschwenkt wird, oder von diesem getrennt werden, wenn der Rollbehälter während des Beladevorgangs verschwenkt wird.

Es kann ferner vorgesehen sein, dass der Füllgrad des Rollbehälters während des Beladevorgangs mittels einer Erfassungseinrichtung überwacht wird. Dadurch kann die Prozesssicherheit im Rahmen der füllstandsoptimierten Befüllung des Rollbehälters weiter erhöht werden. Als Erfassungseinrichtung kann ein Kamerasystem oder ein anderes Sensorsystem vorgesehen werden, das den Füllgrad, insbesondere den Leerzustand, des Rollbehälters erfasst, bevor dieser befüllt wird. Die Erfassungseinrichtung kann ferner ein weiteres Kamerasystem oder äquivalentes Sensorsystem vorgesehen sein, um einen Füllgrad des Rollbehälters nach dem Befüllen des Rollbehälters zu erfassen. Zu diesem Zweck kann beispielsweise ein Bild des Rollbehälters oder der Einfüllöffnung des Rollbehälters von oberhalb des Rollbehälters aufgenommen werden. Durch den Vergleich mit Referenzbildern in einem Bildspeicher kann festgestellt werden, inwieweit der optimale Füllstand des Rollbehälters erreicht ist. Das im Bildspeicher gespeicherte Bild des Rollbehälters kann mit den einzelnen gewichteten Volumina und ggf. weiteren Eigenschaften der Packstücke im Rollbehälter verknüpft werden.

Durch den Vergleich des ermittelten Füllstands und durch die Zuordnung des Füllstands zu den über das Bild mit dem Füllstand verknüpften gewichteten Volumina kann eine Optimierung des Beladevorgangs des Rollbehälters erreicht werden. Aus einer Vielzahl von Füllstandsbildern, die mit den jeweiligen gewichteten Volumina verknüpft sind, können durch maschinelles Lernen Regelmäßigkeiten erkannt werden, die zu einer Unter- oder Überfüllung des Rollbehälters führen. So kann z.B. erkannt werden, dass der Anteil kleiner und/oder komprimierbarer Packstücke 1 erhöht werden kann, wenn ein gewisser Anteil sperriger Packstücke vorhanden ist, die Lehrräume bilden, die die kleinen und komprimierbaren Packstücke ausfüllen können. Dies kann dazu führen, dass der Gewichtungsfaktor der kleinen und/oder komprimierbaren Pakete weiter verringert wird. Das Ermitteln des Füllstands erhöht außerdem die Prozesssicherheit. Denn durch Begrenzen der Befüllung auf ein vorbestimmtes Maß kann verhindert werden, dass Pakete über die Einfüllöffnung des Rollbehälters hinausragen und dann beim nachfolgenden Transport herausfallen können.

Es kann vorgesehen sein, dass der Beladevorgang des Rollbehälters das Überführen von Paketen von einem Sorter über eine Endstelle in den Rollbehälter umfasst. In diesem Fall kann die Rollbehälterbeladestation durch eine Parkbucht für einen Behälter entlang der Sorterstrecke realisiert sein. Eine entsprechende Rollbehälterbeladestation kann eine Rutsche aufweisen, über welche die Pakete in eine Behälteröffnung in den Behälter fallen können. Ferner kann die Parkbucht eine Beladeposition für den Behälter bereitstellen, welche eine Endposition für einen mit einem Transportsystem, insbesondere einem fahrerlosen Transportsystem, transportierten Behälter darstellt. Die Parkbucht kann derart ausgebildet sein, dass der Behälter zumindest abschnittsweise in diese Hineinfahren kann. Beispielsweise kann die Parkbucht zwei seitliche sich senkrecht von der Sorterstrecke wegerstreckende Begrenzungswände aufweisen, welche einen in der Beladeposition befindlichen Behälter zumindest abschnittsweise umgreifen. In dieser Parkbucht und/oder am fahrerlosen Transportsystem kann nun ein Sensorsystem vorgesehen sein, mit dem in der Beladeposition des Behälters im Innern der Rollbehälterbeladestation, das heißt in der Parkbucht, mindestens eine relative Position zwischen dem Behälter und mindestens einem Bezugspunkt im Innern der Parkbucht bestimmt ist.

Ferner kann die Sortierung der für den Rollbehälter bestimmten Pakete basierend auf objektspezifischen Merkmalen, wie beispielsweise einem Barcode oder einer Adresse, erfolgen. Alternativ oder ergänzend kann das Sortieren der Pakete basierend auf einen Sortierplan erfolgen.

Außerdem kann vorgesehen sein, dass das Verfahren ferner das Erfassen von Daten betreffend die Dimensionen der auf dem Sorter geförderten Pakete umfasst, und Bestimmen anhand der Daten der in den Rollbehälter verladenen Pakete, ob der Rollbehälter gefüllt ist. Dazu kann eine Steuerung vorgesehen sein, die einerseits die die Dimensionen der Pakete betreffenden Daten erhält, welche im Zuge des Förderns der Pakete über den Sorter mittels einer Messeinrichtung erfasst werden, wobei die Steuerung ferner dazu eingerichtet ist, anhand der Daten der in den Rollbehälter verladenen Pakete mittels der bekannten Dimensionen der Pakete den aktuellen Füllstand des Rollbehälters zu berechnen.

Das Verfahren kann ferner die automatische Beladung gleichzeitig mehrerer Rollbehälter über den Sorter vorsehen. Mittels der Steuerung wird bestimmt, wann bzw. ob basierend auf der Größe bzw. dem Volumen der Pakete die jeweiligen Rollbehälter gefüllt sind. Die Rollbehälter können dabei logisch als Endstellen genutzt und dem System zugeordnet werden. Sobald mittels der Steuerung ein Rollbehälter als voll erkannt wird, kann dieser mittels eines fahrerlosen Transportfahrzeugs abtransportiert werden und ein leerer Rollbehälter mittels eines weiteren fahrerlosen Transportfahrzeugs die Position bzw. die Endstelle des vorherigen Rollbehälters am jeweiligen Sorterausgang einnehmen.

Die Erfindung ermöglicht Ausführungsformen, die ein vollautomatisiertes Rollbehälterhandling bereitstellen, bei dem beispielsweise volle Rollbehälter aus Transportfahrzeugen des KEP-Bereichs entladen und einer, vorzugsweise vollautomatisierten, Entladestation für Rollbehälter zugeführt werden. Je nach Rollbehälter kann vorgesehen sein, diese von dem Transportsystem zusammengesteckt (verkleinert) zu einer Lagerposition zu überführen. Für die Beladung der Rollbehälter können diese von einer Lagerstelle mit dem Transportsystem automatisch entnommen und in der zuvor beschriebenen Weise der Rollbehälterbeladestation zugeführt werden, dort vollautomatisiert befüllt und anschließend zu dem zu beladenden Fahrzeug transportiert werden. Alternativ zu dem Transport zu einem Transportfahrzeug kann der Rollbehälter auch an einer Lagerstelle abgestellt beziehungsweise zwischengelagert werden.

Obwohl die Erfindung darauf abzielt, die Nachteile zwangsgeführter Systeme zu beheben, können Ausführungsformen erfindungsgemäßer Anordnungen, zumindest Teile des Transportsystems, ein zwangsgeführtes Transportsystem, beispielsweise ein Schienensystem, aufweisen. Alternativ zu einem Schienensystem kann ein solches zwangsgeführtes Transportsystem auch in den Boden versenkte Mitnehmerelemente für Rollbehälter aufweisen, die entlang der Förderstrecke angetrieben sind.

Weitere Einzelheiten der Erfindung werden anhand der nachstehenden Figuren erläutert. Dabei zeigt:
- Figur 1: eine beispielhafte Ausführungsform einer erfindungsgemäßen Anordnung für die Einführung eines Rollbehälters in eine Rollbehälterbeladestation;
- Figur 2: eine beispielshafte Ausführungsform einer Rollbehälterbeladestation;
- Figur 3: eine weitere Ausführungsform einer Rollbehälterbeladestation;
- Figur 4: eine weitere Ausführungsform einer Rollbehälterbeladestation;
- Figur 5: die Ausführungsform der Rollbehälterbeladestation gemäß Figur 4;
- Figur 6: ein Behälter gemäß der Ausführungsform der Rollbehälterbeladestation gemäß einer der Figuren 4 oder 5;
- Figur 7: eine Entladestation gemäß einer der Ausführungsform der Rollbehälterbeladestation gemäß einer der Figuren 4 oder 5.

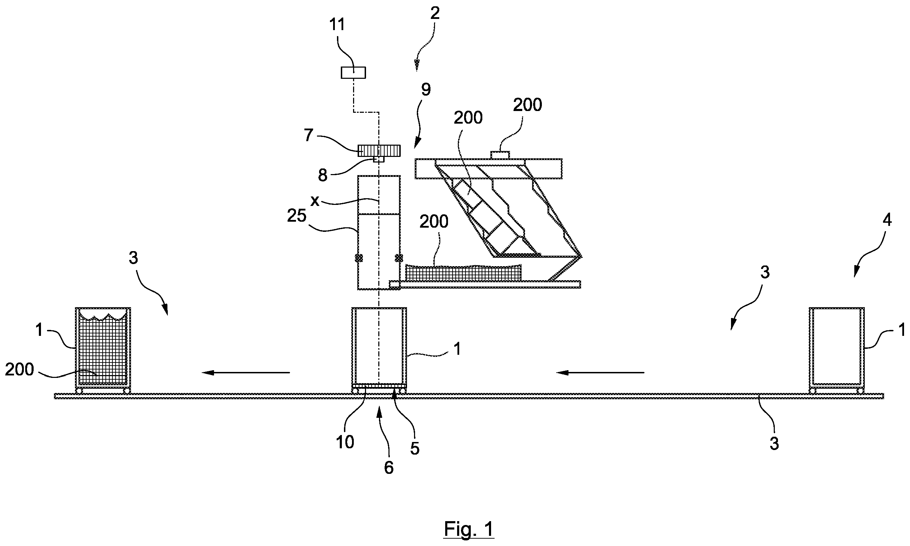

Die Figur 1 zeigt in schematischer Darstellung eine Anordnung für die Zuführung und Beladung eines Rollbehälters 1 in einer Rollbehälterbeladestation 2. Demgemäß wird an einer Annahmestelle 4 für Rollbehälter 1 mindestens ein Rollbehälter 1 und vorzugsweise eine ganze Vielzahl Rollbehälter bereitgestellt. Die Rollbehälter 1 können beispielsweise aufgestaut und/oder ineinandergeschoben und/oder miteinander verkettet an der Annahmestelle 4 bereitgestellt werden. An der Annahmestelle 4 können die Rollbehälter 1 dann bedarfsweise von dem Transportsystem 3 voneinander separiert und einzeln der Rollbehälterbeladestation 2 zugeführt werden. Die Zuführung kann bevorzugt ohne eine Zwangsführung ausgeführt sein. Demgemäß kann das Transportsystem 3 beispielsweise ein selbstfahrendes Transportsystem (FTS) sein. Erfindungsgemäß kann aber auch vorgesehen sein, dass zumindest anteilig die Wegstrecke zwischen der Annahmestelle 4 und der Rollbehälterbeladestation 2 zwangsgeführt ist, während das Positionieren des leeren Rollbehälters 1 im Innern der Rollbehälterbeladestation 2 sensorgestützt und ohne Zwangsführung erfolgt, wobei ein Sensorsystem 5, 7 der Anordnung eine Relativposition des Rollbehälters 1 in Bezug auf die Rollbehälterbeladestation 2 bestimmt. Falls erforderlich, kann das Sensorsystem 5, 7 eine Positionsabweichung des Rollbehälters 1 von einer Sollposition oder von einer Sollwegstrecke, die der Rollbehälter 1 zurücklegt, erfasst werden, um entweder auf eine Aktorik zur Lenkung des Rollbehälters 1 beziehungsweise des Transportsystems 3 einzuwirken oder zumindest ein Fehlersignal auszugeben oder den Beladeprozess zu unterbrechen, um eine Kollision zwischen dem nicht ordnungsgemäß positionierten Rollbehälter 1 und beispielsweise dem Schacht 25 der Rollbehälterbeladestation 2, der für das Beladen des Rollbehälters 1 in den Rollbehälter 1 abgesenkt wird, zu vermeiden.

Das Sensorsystem 5 weist eine optische Kamera 7 im Kopfbereich 9 der Rollbehälterbeladestation 2 auf, mit der eine Standfläche 10 für den Rollbehälter 1 in Bodenbereich der Rollbehälterbeladestation überwacht ist. Mithilfe von optischer Bildverarbeitung und beispielsweise einer Kantenerkennung ist es möglich, aus dem Kamerabild, welches einerseits den Horizontalquerschnitt des Rollbehälters 1 und andererseits die Innenbegrenzung des Rollbehälterbeladeraums zeigt, auf die Relativposition des Rollbehälters 1 in Bezug auf die Rollbehälterbeladestation 2 zu schließen. Dies wiederum gibt Auskunft darauf, ob bei dem Absenken des Schachts 25 dieser prozesssicher in den Rollbehälter 1 abgesenkt werden kann oder ob mit einer Kollision zwischen dem Schacht 25 und dem Rollbehälter 1 gerechnet werden muss.

Nach dem Befüllen des Rollbehälters 1 kann der Schacht 25 wieder aus dem Rollbehälter 1 herausgehoben werden, danach kann der befüllte Rollbehälter 1 mit dem Transportsystem 3 aus der Beladestation 2 heraustransportiert und beispielsweise an einem Transportfahrzeug für den Weitertransport des befüllten Rollbehälters 1 zugeführt werden.

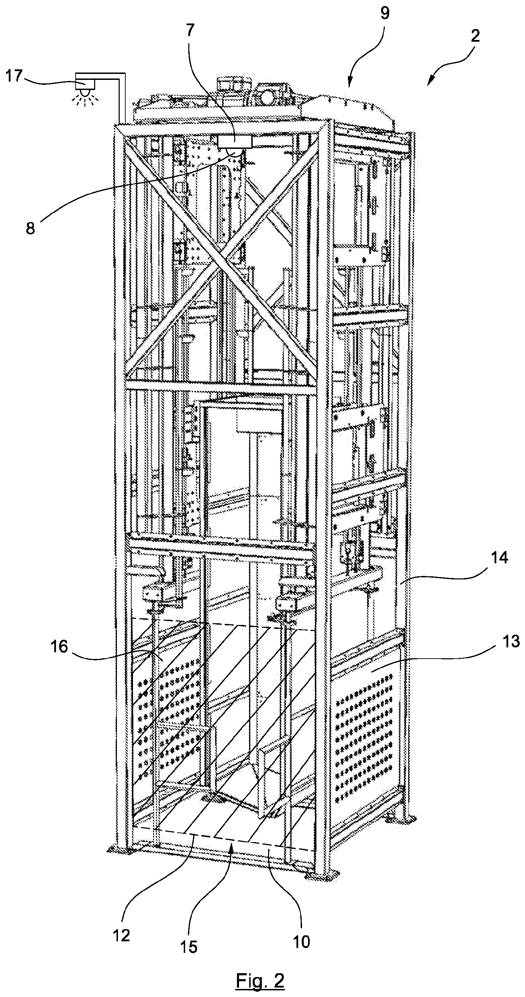

Die Figur 2 zeigt im Detail eine beispielshafte Ausführungsform einer Rollbehälterbeladestation, die insbesondere als ein geschlossenes System ausgebildet ist, mit einem Rahmengestell 14, welches einen höhenverstellbaren Schacht 25 aufweist. Mit der Beladestation 2 kann der Schacht 25 aus einer oberen angehobenen Position in abgesenkte Position überführt werden, in der der Schacht 25 in den im unteren Rollbehälteraufnahmeraum 12 befindlichen Rollenbehälter (nicht dargestellt) abgesenkt ist, um den Schacht 25 in den Rollbehälter 1 zu entleeren.

Im Kopfbereich 9 weist die Rollbehälterbeladestation 2 einen Positionssensor 7 auf, der beispielsweise als eine optische Kamera 8 ausgebildet sein oder eine solche aufweisen kann. In der bereits mit Bezug auf Figur 1 beschriebenen Weise kann der Positionssensor 7, insbesondere die optische Kamera 8, dazu eingerichtet sein, den Rollbehälteraufnahmeraum 12 in vertikaler Blickrichtung von oben auf die Standfläche 10 für einen Rollbehälter 1 zu überwachen, insbesondere eine Relativposition eines sich auf der Standfläche 10 befindlichen Rollbehälters 1 in Bezug auf die Rollbehälterbeladestation 2, insbesondere das Rahmengestell 14 und/oder eine Wand 13.

Eine Sicherheitseinrichtung 17 ist dazu vorgesehen, um den Eingang 15 des Rollbehälteraufnahmeraums 12 auf Personen oder Gegenstände zu überwachen, die im Zugriffsbereich des Rollbehälteraufnahmeraums 12 angeordnet sind. Dies ermöglicht es, den Rollbehälteraufnahmeraum 12 permanent offen und insbesondere frei von einem Verschließelement 18, beispielsweise von einem Rolltor, auszugestalten, welches im Stand der Technik üblicherweise verwendet wird.

Die Rollbehälterbeladestation 2 weist im Wesentlichen ein aus Profilen gebildetes turmartiges Rahmengestell auf 14, welches im Kopfbereich 9 analog zu einem Personenaufzug Antriebsmittel aufweist, mit welchen der Schacht 25 in Vertikalrichtung verlagert werden kann. Der Schacht 25 wiederum weist an drei vertikalen Außenseiten jeweils ein Wandelement auf sowie eine über die gesamte vertikale Höhe offene Seite. An einer Unterseite weist der Schacht 25 eine verschließbare Öffnung auf, die über eine Klappe, hier eine zweigeteilte Klappe geöffnet und wieder verschlossen werden kann. Die beiden Teilklappen des Klappenelements sind über einen Stellantrieb in nahezu jeder beliebigen Stellposition zwischen einer vollständig geöffneten und einer vollständig geschlossenen Position arretierbar, sodass der Öffnungsquerschnitt der Öffnung insoweit einstellbar ist, als dass ein schonendes und kontinuierliches Herausströmen des Stückguts aus dem Schacht in einen Behälter (nicht dargestellt) erzielt werden kann.

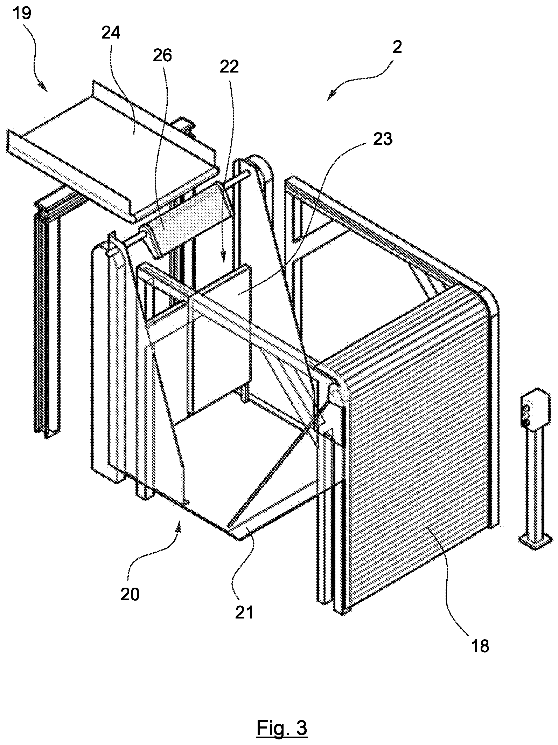

Die Figur 3 zeigt eine weitere Ausführungsform einer Rollbehälterbeladestation 2. Die Rollbehälterbeladestation 2 weist ein Rahmengestell 14 mit einer darin aufgenommenen Schwenkeinrichtung 20 auf. Die Schwenkeinrichtung 20 weist eine Aufstandsfläche 21 mit sich dazu senkrecht erstreckenden Seitenwänden auf. Rückwärtig weist die Schwenkeinrichtung 20 ein Paar gegenläufig verschwenkbarer Türflügel 23 auf, um den rückwärtigen Teil der Schwenkeinrichtung 20 bedarfsweise freizugeben, mithin zu öffnen, um das Einsetzen und das Entnehmen eines Rollbehälters 100 zu ermöglichen.

Eine Sicherheitsrollade 18 kann über die Schwenkeinrichtung 20 geschoben und anschließend ein Rollbehälter 100 hineingeschoben werden. Nach dem Befüllen fährt die Rollade 18 wieder über den Bereich um den Entnehmer zu schützen. Dann können die Türflügel 23 geöffnet und der Behälter 100 aus der Rollbehälterbeladestation 2 gezogen werden.

Das bei der Ausführungsform einer Rollbehälterbeladestation 2 gemäß Figur 3 vorgesehene Rolltor 18 kann optional weggelassen werden, wenn eine Sicherheitseinrichtung 17 gemäß der Ausführungsform gemäß Figur 2 auch bei der Ausführungsform gemäß Figur 3 verwirklicht ist.

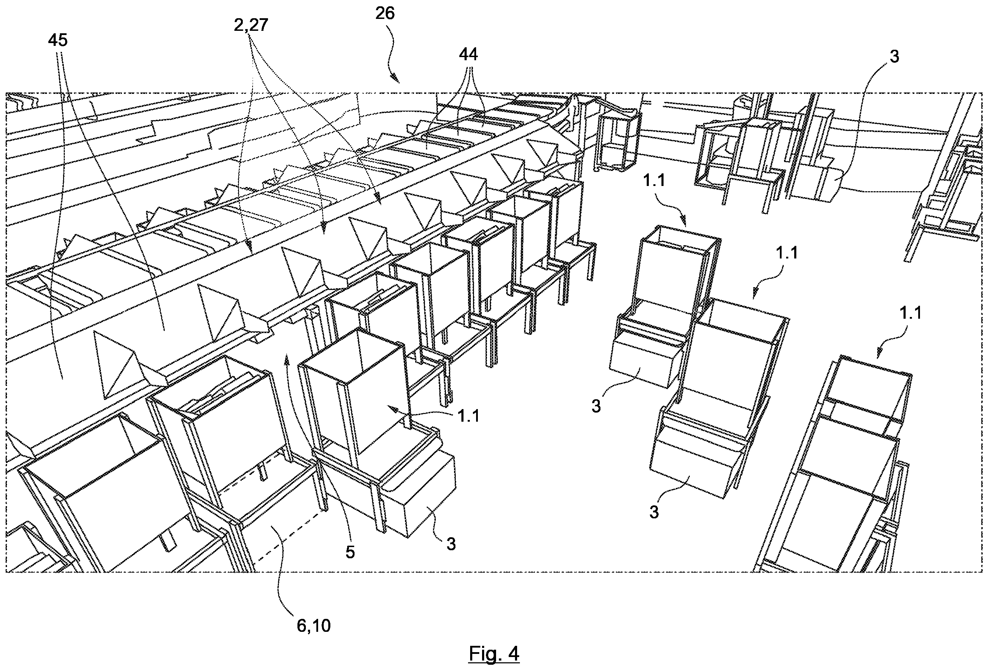

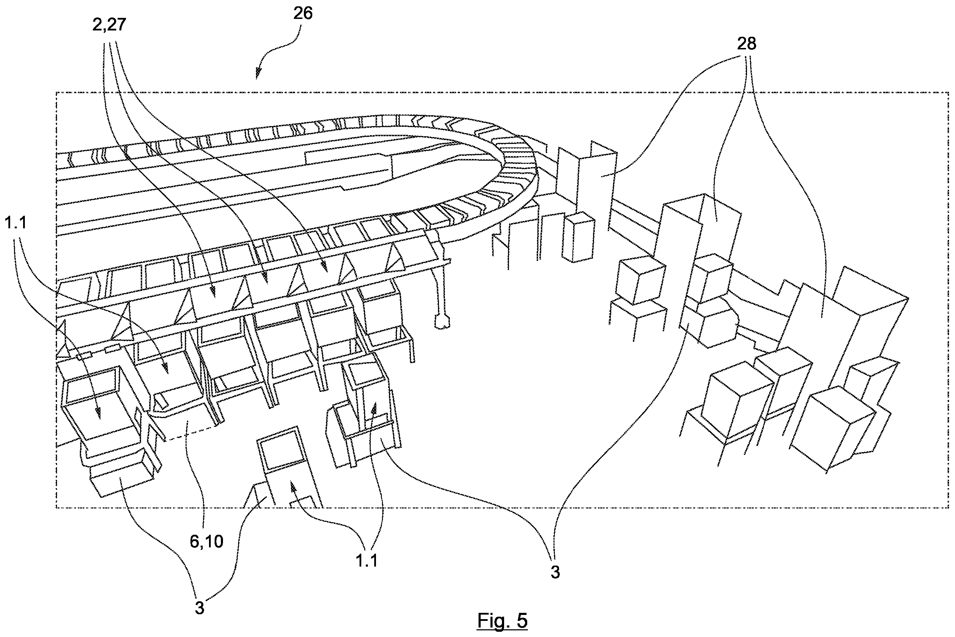

Die Figuren 4 und 5 zeigen eine Ausführungsform der Rollbehälterbeladestation 2, bei der diese als Ausgang eines Querbandsorters 26 ausgebildet ist. Dieser weist eine Hauptförderrichtung auf, entlang welcher ein Stückgutstrom von Paketen gefördert wird. Der Querbandsorter 26 besteht aus einer Vielzahl nebeneinander angeordneter Querbänder 44, deren Förderrichtung sich senkrecht zur Hauptförderrichtung erstreckt. Seitlich entlang der Hauptförderrichtung weist der Sorter 26 eine Mehrzahl nebeneinander angeordneter Endstellen 27 auf, an welchen zur Sortierung der Pakete diese gezielt an einer vorgesehenen Endstelle 27 ausgeschleust werden können. Bei Erreichen einer für ein Paket vorgesehenen Endstelle 27 wird das betreffende Querband 44 aktiviert und das darauf transportierte Paket quer zur Hautförderrichtung aus dem Sorter 26 ausgeschleust. Zwischen Querband 44 und Endstelle 27 ist dabei jeweils eine Rutsche 45 vorgesehen, über welche die Pakete jeweils in einen bereitgestellten Behälter 1.1 rutschen können. Die Endstellen 27 stellen dabei jeweils eine Rollbehälterbeladestation 2 dar. An diesen wird jeweils in einer Beladeposition 6 ein rollenloser Behälter 1.1 positioniert und mittels eines Sensorsystems 5 ausgerichtet. Die Beladeposition 6 umfasst eine vorgesehene Standfläche 10, innerhalb welcher der Behälter 1.1 zum Empfangen der Pakete positioniert sein muss. Wenn nun ein Paket vom Sorter 26 ausgeschleust wird, fällt dieses in den bereitgestellten Behälter 1.1. Der Transport der Behälter 1.1 zwischen den Endstellen 27 und einer Mehrzahl von Behälterentladestationen 28 erfolgt mittels AGVs 3. Hierzu weisen die Behälter 2 an ihrer Unterseite jeweils einen AGV-Aufnahmebereich 32 auf, in welchen diese Einfahren können und für den Transport mittels einer Hubeinheit 42 anheben können. Die Behälterentladestationen 28 sind jeweils als manueller Arbeitsplatz ausgeführt, an welchem die Behälter 1.1 in Säcke umgefüllt werden. Die Behälter 1.1 können beispielsweise unmittelbar von einer der Endstellen 27 in eine vorgesehene bzw. freie Behälterentladestation 28 verbracht werden. Alternativ kann vorgesehen sein, dass im Falle einer gerade besetzten Behälterentladestation 28 der Behälter 1.1 in eine Warteschlange vor der Behälterentladestation 28 eingereiht wird. Hierbei kann beispielsweise ein erstes AGV 3 für den Transfer zwischen den Endstellen und einer der Behälterentladestationen 28 vorgesehen und ein zweites AGV für das Einfahren der vor der Behälterentladestation 28 wartenden Behälter 1.1 in die Behälterentladestation 28 bzw. für das erneute Bereitstellen der dann entleerten Behälter 1.1 vorgesehen sein.

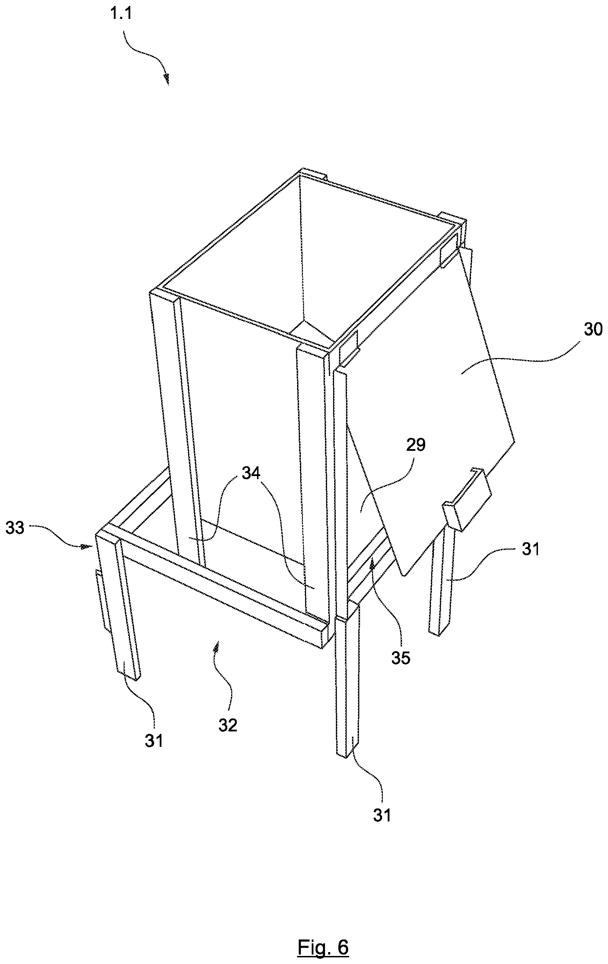

Figur 6 zeigt eine Detailansicht eines rollenlosen Behälters 1.1, welcher im Verbund mit einem AGV 3 als Rollbehälter 1 im Sinne der Erfindung zu verstehen ist. Der Behälter 1.1 weist einen auf Stelzen 31 aufgebockten Korpus auf, so dass eine Transportebene 33 des Behälters 1.1 vom Boden beabstandet ist. Dadurch wird ein AGV-Aufnahmebereich 32 bereitgestellt, welcher zum Aufnehmen eines AGVs eingerichtet ist. Oberhalb der Transportebene 33 ist ein Freiraum 35 vorgesehen, der durch Stützen 34 realisiert ist, welche den Behälterkorpus von der Transportebene 33 beabstanden. Der Freiraum 35 dient dazu, dass eine Hubvorrichtung 37 einer Behälterentladestation 28 im Zuge des Einfahrens des Behälters 1.1 in die Behälterentladestation 28 in den Freiraum 35 eingreifen kann, so dass der noch auf dem AGV 3 befindliche Behälter 1.1 mittels der Hubvorrichtung 37 angehoben werden kann. Der Behälter 1.1 weist an seiner Oberseite eine Beladeöffnung auf, um über diese Pakete von einer Rutsche 45 einer Entladestelle 27 eines Sorters 26 entgegenzunehmen. Der Behälterboden 29 weist eine Schräge auf, welche in Richtung einer Entladeklappe 30 ausgerichtet ist. Die Entladeklappe 30 ist an einem oberen Rand einer Behälterwand anscharniert und weist eine horizontale Schwenkachse auf, so dass die Entladeklappe 30 von unten nach oben aufgeschwenkt werden kann. Dadurch kann der Behälterinhalt durch einfaches Öffnen der Entladeklappe 30 entleert werden, indem die Pakete aufgrund der Schräge des Behälterbodens 29 aus diesem automatisch herausrutschen.

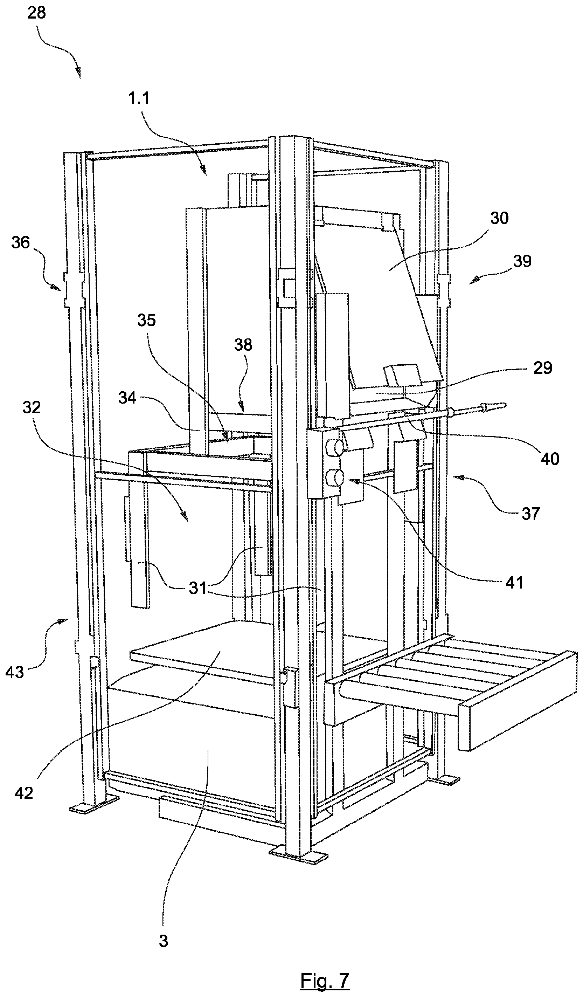

Figur 7 zeigt eine Behälterentladestation 28 im Zustand eines von einer Hubeinheit 42 eines AGVs 3 abgehobenen Behälters 1.1. Diese weist im Wesentlichen ein Rahmengestell 36 mit einem Aufnahmebereich für ein AGV mit einem darauf geladenen Behälter 1.1 auf, sowie eine am Rahmengestell befestigte Hubvorrichtung 37 mit einer manuellen Bedieneinheit 41. Das AGV 3 ist zuvor mitsamt dem auf der Hubeinheit aufgebockten Behälter 1.1 über eine Einfahrseite 43 in die Behälterentladestation 28 eingefahren worden, wobei im Zuge des Einfahrens die Gabelzinken 38 der Hubvorrichtung 37 der Behälterentladestation 28 in den Freiraum 35 des Behälters 1.1 eingegriffen haben. Zum Abheben des Behälters 1.1 vom AGV 3 kann die Hubvorrichtung 37 manuell mittels der Bedieneinheit 41 höhenverstellt werden. Der Behälter 1.1 ist in der gezeigten Darstellung in der finalen Entladeposition angekommen, sodass die Entladeöffnung an eine Sacktrageeinrichtung 40 angrenzt (in der Darstellung ist zu Übersichtszwecken kein Sack eingehängt). Die Entladeseite 39 befindet sich gegenüber der Einfahrseite 43. Wenn der Bediener nun die Entladeklappe 30 des Behälters 1.1 öffnet, rutscht der Behälterinhalt automatisch aufgrund des schrägen Behälterbodens 29 in den an der Sacktrageeinrichtung 40 aufgehängten Sack. Nach erfolgreicher Entleerung des Behälters 1.1 wird dieser wieder durch manuelles Betätigen der Bedieneinheit 41 auf das AGV abgesenkt. Anschließend fährt das AGV den Behälter 1.1 aus der Behälterentladestation 28 und ein weiterer gefüllter Behälter kann in die Behälterentladestation 28 eingefahren werden.

### Bezugszeichenliste

- 1: Rollbehälter
- 1.1: Behälter ohne Rollen
- 2: Rollbehälterbeladestation
- 3: Transportsystem
- 4: Annahmestelle
- 5: Sensorsystem
- 6: Beladeposition
- 7: Positionssensor
- 8: Kamera
- 9: Kopfbereich
- 10: Standfläche
- 11: Bildbearbeitungssystem
- 12: Rollbehälteraufnahmeraum
- 13: Außenwand
- 14: Rahmengestell
- 15: Eingang
- 16: Lichtvorhang
- 17: Sicherheitseinrichtung
- 18: Verschließelement
- 19: Objektsammelstelle
- 20: Schwenkeinrichtung
- 21: Auftstandsfläche
- 22: Begrenzungswand
- 23: Türflügel
- 24: Objektzuführung
- 25: Schacht
- 26: Querbandsorter
- 27: Endstelle
- 28: Behälterentladestation
- 29: Behälterboden
- 30: Entladeklappe
- 31: Stelzen
- 32: AGV-Aufnahmebereich
- 33: Transportebene
- 34: Stützen
- 35: Freiraum
- 36: Rahmengestell
- 37: Hubvorrichtung
- 38: Gabelzinken
- 39: Entladeseite
- 40: Sacktrageeinrichtung
- 41: Bedieneinheit
- 42: Hubeinheit
- 43: Einfahrseite
- 44: Querband
- 45: Rutsche
- 200: Objekt

## Patentansprüche

1. Anordnung für die Einführung eines Rollbehälters (1) in eine Rollbehälterbeladestation (2) zur Befüllung des Rollbehälters (1) mit sortierten Packstücken in einem Logistikzentrum, mit einem Rollbehälter (1), welcher an seiner Oberseite eine Beladeöffnung aufweist, über welche Paketstücke oder sonstige zu verladende Artikel in den Behälter geladen werden können, wobei der Rollbehälter beispielsweise ein Speditionsbehälter oder Zwischenbehälter ist, und mit einer Rollbehälterbeladestation (2), wobei die Anordnung ein Transportsystem (3) für den Transport von Rollbehältern (1) aufweist, wobei das Transportsystem (3) eine Annahmestelle (4) für leere Rollbehälter (1) mit der Rollbehälterbeladestation (2) verbindet, wobei das Transportsystem (3) eine Endposition für mit dem Transportsystem (3) transportierte Rollbehälter (1) in einer Beladeposition (6) des Rollbehälters (1) im Innern der Rollbehälterbeladestation (2) aufweist und die Anordnung ein Sensorsystem (5) aufweist, **dadurch gekennzeichnet, dass** das Sensorsystem (5) eine optische Kamera (8) aufweist, wobei die optische Kamera (8), die im Kopfbereich (9) der Rollbehälterbeladestation (2) angeordnet ist, oder das Sensorsystem (5) ein Bildverarbeitungssystem (11) aufweist, welches dazu eingerichtet ist bei einem in der Beladeposition im Innern der Rollbehälterbeladestation (2) angeordneten Rollbehälter (1) mindestens einen relativen Abstand zwischen dem Rollbehälter (1) und mindestens einem Bezugspunkt im Innern der Rollbehälterbeladestation (2) zu bestimmen, wobei der Bezugspunkt eine innere Begrenzung eines Rollbehälteraufnahmeraums (12) der Rollbehälterbeladestation ist.

2. Anordnung nach Anspruch 1, bei der die optische Kamera (8) eine optische Achse (x) aufweist, die sich in Vertikalrichtung oder unter einem spitzen Winkel zur Vertikalrichtung erstreckt.

3. Anordnung nach einem der vorangegangenen Ansprüche, bei der der Rollbehälteraufnahmeraum (12) einen Eingang (15) für einen Rollbehälter (1) aufweist, wobei der Eingang (15) einen Lichtvorhang (16) aufweist, der dazu eingerichtet ist, das Einfahren eines Rollbehälters (1) durch den Eingang (15) in den Rollbehälteraufnahmeraum (12) zu erfassen.

4. Anordnung nach Anspruch 3, bei der der Lichtvorhang (16) dazu eingerichtet ist,
das vollständige Einfahren des Rollbehälters (1) durch den Eingang (15) in den Rollbehälteraufnahmeraum (12) zu erfassen und/oder bei dem Einfahren des Rollbehälters (1) durch den Eingang (15) in den Rollbehälteraufnahmeraum (12) eine Außengeometrie des Rollbehälters (1) abzutasten und dabei vorzugsweise mindestens eines von Höhe, Breite, Tiefe und Aufstandsfläche des Rollbehälters (1) zu erfassen.

5. Anordnung nach einem der vorangegangenen Ansprüche, bei der ein Rollbehälteraufnahmeraum (12) der Rollbehälterbeladestation (2) mindestens ein mechanisches Führungselement, vorzugsweise mindestens eine Führungsschiene, aufweist, mit dem ein Rollbehälter (1) beim Eintreten in den Rollbehälteraufnahmeraum (12) in eine Beladeposition (6) des Rollbehälters (1) im Innern der Rollbehälterbeladestation (2) geführt ist.

6. Anordnung nach Anspruch 5, bei der der Rollbehälter (1) in der Beladeposition (6) an einem Anschlag anliegt, mit dem eine Bewegung des Rollbehälters (1) in Einschubrichtung des Rollbehälters (1) durch einen Eingang (15) des Rollbehälteraufnahmeraums (12) in den Rollbehälteraufnahmeraum (12) hinein begrenzt ist.

7. Anordnung nach einem der vorangegangenen Ansprüche, bei der das Transportsystem (3) ein fahrerloses Transportsystem ist oder aufweist, wobei das fahrerlose Transportsystem dazu eingerichtet ist, einen Rollbehälter (1) an der Annahmestelle (4) für leere Rollbehälter (1) anzunehmen und in einen Rollbehälteraufnahmeraum (12) der Rollbehälterbeladestation (2) einzuführen.

8. Anordnung nach Anspruch 7, wobei eine mechanische Kopplung zwischen dem fahrerlosen Transportsystem und dem Rollbehälter (1) durch eine reibschlüssige Verbindung und/oder durch einen Hubmechanismus und/oder durch ineinandergreifende Formkonturen des fahrerlosen Transportsystems und des Rollbehälters (1) erfolgt.

9. Anordnung nach Anspruch 8, bei der das fahrerlose Transportsystem das Sensorsystem (5), vorzugsweise mindestens eine optische Kamera (8), aufweist, das dazu eingerichtet ist, beim Einfahren des Rollbehälters (1) in den Rollbehälteraufnahmeraum (12) kontinuierlich oder periodisch eine Relativposition des Rollbehälters (1) in Bezug auf die Rollbehälterbeladestation (2) zu bestimmen.

10. Anordnung nach einem der vorangegangenen Ansprüche, bei der die unmittelbare Umgebung der Rollbehälterbeladestation (2), vorzugsweise mindestens ein Eingangsbereich vor einem Eingang (15) in einen Rollbehälteraufnahmeraum (12) der Rollbehälterbeladestation (2), von einer Sicherheitseinrichtung (17) auf das Vorhandensein von Personen oder Gegenständen überwacht ist.

11. Anordnung nach Anspruch 10, bei der der Eingang (15) des Rollbehälteraufnahmeraums (12) permanent offen und vorzugsweise frei von einem Verschließelement (18) ausgeführt ist.

12. Verfahren für die Einführung eines Rollbehälters (1) in eine Rollbehälterbeladestation (2) mit einer Anordnung nach einem der Ansprüche 1 bis 11, bei dem der Rollbehälter (1) mit dem Transportsystem (3) zwischen der Annahmestelle (4) für leere Rollbehälter (1) und der Rollbehälterbeladestation (2) transportiert wird, **gekennzeichnet durch** das Bestimmen einer Relativposition des Rollbehälters (1) in Bezug auf die Rollbehälterbeladestation (2) mittels des Sensorsystems (5).

13. Verfahren nach Anspruch 12, bei dem mit dem Sensorsystem (5) in einer Beladeposition (6) des Rollbehälters (1) im Innern der Rollbehälterbeladestation (2) mindestens ein relativer Abstand zwischen dem Rollbehälter (1) und mindestens einem Bezugspunkt im Innern der Rollbehälterbeladestation (2) bestimmt wird.

14. Verfahren nach Anspruch 12 oder 13, bei dem das Einfahren eines Rollbehälters (1) durch einen Eingang (15) in einen Rollbehälteraufnahmeraum (12) dadurch erfasst wird, dass bei dem Einfahren des Rollbehälters (1) durch den Eingang (15) ein Lichtvorhang (16) des Eingangs durchfahren und damit durchbrochen wird, wobei vorzugsweise das vollständige Einfahren des Rollbehälters (1) durch den Eingang (15) in den Rollbehälteraufnahmeraum (12) mit dem Lichtvorhang (16) erfasst wird und/oder bei dem Einfahren des Rollbehälters (1) durch den Eingang (15) in den Rollbehälteraufnahmeraum (12) eine Außengeometrie des Rollbehälters (1) mit dem Lichtvorhang (16) abgetastet wird, wobei vorzugsweise mindestens eines von Höhe, Breite, Tiefe und Aufstandsfläche des Rollbehälters (1) bestimmt wird.

15. Verfahren nach einem der Ansprüche 12 bis 14, bei dem ein fahrerloses Transportsystem des Transportsystems (3) einen Rollbehälter (1) an der Annahmestelle (4) für leere Rollbehälter (1) annimmt, von der Annahmestelle (4) zu der Rollbehälterbeladestation (2) transportiert und in einen Rollbehälteraufnahmeraum (12) der Rollbehälterbeladestation (2) einführt.

16. Verfahren nach Anspruch 15, bei dem das Sensorsystem (5) zumindest beim Einführen des Rollbehälters (1) in den Rollbehälteraufnahmeraum (12) mit dem fahrerlosen Transportsystem (3) kontinuierlich oder periodisch eine Relativposition des Rollbehälters (1) in Bezug auf die Rollbehälterbeladestation (2) bestimmt.

17. Verfahren nach Anspruch 15 oder 16, bei dem während eines Beladevorgangs des Rollbehälters (1) mit Packstücken entweder
a. der zu beladene Rollbehälter (1) in einer zur Vertikalen geneigten Position gehalten oder aus dieser Position in eine aufrechte Position geschwenkt wird, wobei der vertikale Abstand zwischen einer Einfüllöffnung des Rollbehälters (1) und einem Boden des Rollbehälters (1) kontinuierlich oder schrittweise vergrößert wird, oder
b. ein höhenverstellbarer Schacht (25) der Rollbehälterbeladestation (2) mit sortiertem Stückgut (200) befüllt und in dem zu beladenen Rollbehälter (1) abgesenkt wird, und wobei das sortierte Stückgut (200) aus dem Schacht (25) in den Rollbehälter (1) entleert wird, wenn der Schacht (25) infolge des Absenkens eine untere Position erreicht hat, oder
c. ein kompakter Stückgutstrom von einem Zuführförderer einer Förderstrecke einer Stückgutsammelstelle zugeführt wird, von welcher die Stückgüter (200) des Stückgutstroms von einem Roboter in den Rollbehälter (1) dosiert werden
d. das Überführen von Paketen von einem Sorter über eine Endstelle in den Rollbehälter (1) umfasst.

18. Verfahren nach Anspruch 17, wobei das fahrerlose Transportsystem (3) während des Beladevorgangs mit dem Rollbehälter (1) gekoppelt bleibt, wenn dieser während des Beladens nicht verschwenkt wird, oder von diesem getrennt wird, wenn der Rollbehälter (1) während des Beladevorgangs verschwenkt wird.

19. Verfahren nach einem der Ansprüche 17 oder 18, wobei der Füllgrad des Rollbehälters (1) während des Beladevorgangs mittels einer Erfassungseinrichtung überwacht wird.

20. Verfahren nach einem der Ansprüche 17 bis 19, wobei die Sortierung der für den Rollbehälter (1) bestimmten Pakete basierend auf objektspezifischen Merkmalen, wie beispielsweise einem Barcode oder einer Adresse, erfolgt.

21. Verfahren nach Anspruch 20, umfassend das Sortieren der Pakete basierend auf einen Sortierplan, wobei der Sortierplan das Bestimmen einer Rollbehälterreihenfolge sowie das frühzeitige Erkennen des Erreichens eines Maximalfüllstands eines derzeit befüllten Rollbehälters umfasst, wobei bei einem sich anbahnenden Maximalfüllstand ein weiterer Leerbehälter bereitgestellt wird.

22. Verfahren nach einem der Ansprüche 17 bis 21, ferner umfassend die Schritte:
Erfassen von Daten betreffend die Dimensionen der auf dem Sorter geförderten Pakete;
Bestimmen anhand der Daten der in den Rollbehälter (1) verladenen Pakete, ob der Rollbehälter (1) gefüllt ist.

## Claims

1. Arrangement for introducing a roll container (1) into a roll container loading station (2) for filling the roll container (1) with sorted packaged items in a logistics center, comprising a roll container (1) which has a loading opening on the upper side thereof, via which loading opening package items or other articles to be loaded can be loaded into the container, the roll container being, for example, a haulage container or an intermediate container, and comprising a roll container loading station (2), the arrangement having a transport system (3) for transporting roll containers (1), the transport system (3) connecting a receiving point (4) for empty roll containers (1) to the roll container loading station (2), the transport system (3) having, for roll containers (1) that are transported by means of the transport system (3), an end position in a loading position (6) of the roll container (1) inside the roll container loading station (2), and the arrangement having a sensor system (5), **characterized in that** the sensor system (5) has an optical camera (8), the optical camera (8), which is arranged in the head region (9) of the roll container loading station (2), or the sensor system (5) having an image processing system (11) which is configured to determine, when a roll container (1) is arranged in the loading position inside the roll container loading station (2), at least a relative distance between the roll container (1) and at least one reference point inside the roll container loading station (2), the reference point being an inner boundary of a roll container receiving space (12) of the roll container loading station.

2. Arrangement according to claim 1, in which the optical camera (8) has an optical axis (x) extending in the vertical direction or at an acute angle to the vertical direction.

3. Arrangement according to either of the preceding claims, in which the roll container receiving space (12) has an entrance (15) for a roll container (1), wherein the entrance (15) has a light curtain (16) which is configured to detect the entry of a roll container (1) through the entrance (15) into the roll container receiving space (12).

4. Arrangement according to claim 3, in which the light curtain (16) is configured to detect the complete entry of the roll container (1) through the entrance (15) into the roll container receiving space (12) and/or to scan an outer geometry of the roll container (1) as the roll container (1) enters through the entrance (15) into the roll container receiving space (12) and preferably to also detect at least one of the height, width, depth and contact area of the roll container (1) in the process.

5. Arrangement according to any of the preceding claims, in which a roll container receiving space (12) of the roll container loading station (2) has at least one mechanical guide element, preferably at least one guide rail, by means of which a roll container (1), as it enters into the roll container receiving space (12), is guided into a loading position (6) of the roll container (1) inside the roll container loading station (2).

6. Arrangement according to claim 5, in which the roll container (1) abuts a stop in the loading position (6), by means of which stop movement of the roll container (1) is limited in the insertion direction of the roll container (1) through an entrance (15) of the roll container receiving space (12) into the roll container receiving space (12).

7. Arrangement according to any of the preceding claims, in which the transport system (3) is or has a driverless transport system, wherein the driverless transport system is configured to receive a roll container (1) at the receiving point (4) for empty roll containers (1) and to introduce said roll container into a roll container receiving space (12) of the roll container loading station (2).

8. Arrangement according to claim 7, wherein the driverless transport system and the roll container (1) are mechanically coupled by way of a friction fit and/or by way of a lifting mechanism and/or by way of interlocking shape contours of the driverless transport system and the roll container (1).

9. Arrangement according to claim 8, in which the driverless transport system has the sensor system (5), preferably at least one optical camera (8), which is configured to continuously or periodically determine a relative position of the roll container (1) in relation to the roll container loading station (2) as the roll container (1) enters into the roll container receiving space (12).

10. Arrangement according to any of the preceding claims, in which the immediate surroundings of the roll container loading station (2), preferably at least one entrance region in front of an entrance (15) into a roll container receiving space (12) of the roll container loading station (2), are monitored for the presence of persons or objects by a safety device (17).

11. Arrangement according to claim 10, in which the entrance (15) of the roll container receiving space (12) is designed to be permanently open and preferably free of a closing element (18).

12. Method for introducing a roll container (1) into a roll container loading station (2) comprising an arrangement according to any of claims 1 to 11, in which method the roll container (1) is transported between the receiving point (4) for empty roll containers (1) and the roll container loading station (2) by means of the transport system (3), **characterized by** determining, using the sensor system (5), a relative position of the roll container (1) in relation to the roll container loading station (2).

13. Method according to claim 12, in which in a loading position (6) of the roll container (1) inside the roll container loading station (2), at least a relative distance between the roll container (1) and at least one reference point inside the roll container loading station (2) is determined by means of the sensor system (5).

14. Method according to claim 12 or 13, in which the entry of a roll container (1) through an entrance (15) into a roll container receiving space (12) is detected by a light curtain (16) of the entrance being passed through and thus interrupted as the roll container (1) enters through the entrance (15), wherein preferably the complete entry of the roll container (1) through the entrance (15) into the roll container receiving space (12) is detected by means of the light curtain (16) and/or an outer geometry of the roll container (1) is scanned by means of the light curtain (16) as the roll container (1) enters through the entrance (15) into the roll container receiving space (12), wherein preferably at least one of the height, width, depth and contact area of the roll container (1) is determined.

15. Method according to any of claims 12 to 14, in which a driverless transport system of the transport system (3) receives a roll container (1) at the receiving point (4) for empty roll containers (1), transports it from the receiving point (4) to the roll container loading station (2) and introduces it into a roll container receiving space (12) of the roll container loading station (2).

16. Method according to claim 15, in which the sensor system (5) continuously or periodically determines a relative position of the roll container (1) in relation to the roll container loading station (2) at least as the roll container (1) is inserted, by means of the driverless transport system (3), into the roll container receiving space (12).

17. Method according to claim 15 or 16, in which during a process of loading the roll container (1) with packaged items, either
a. the roll container (1) to be loaded is held in a position inclined with respect to the vertical or is pivoted from this position into an upright position, wherein the vertical distance between a filling opening of the roll container (1) and a bottom of the roll container (1) is continuously or incrementally increased, or
b. a height-adjustable shaft (25) of the roll container loading station (2) is filled with sorted general cargo (200) and lowered into the roll container (1) to be loaded, and wherein the sorted general cargo (200) is emptied from the shaft (25) into the roll container (1) when the shaft (25) has reached a lower position as a result of the lowering, or
c. a compact stream of general cargo is fed from a feed conveyor of a conveyor line to a general cargo collection point from which the general cargo (200) of the general cargo stream is metered into the roll container (1) by a robot
d. comprises transferring packages from a sorter into the roll container (1) via an end point.

18. Method according to claim 17, wherein the driverless transport system (3) remains coupled to the roll container (1) during the loading process if said roll container is not pivoted during loading, or is detached from said roll container if the roll container (1) is pivoted during the loading process.

19. Method according to either of claims 17 and 18, wherein the filling level of the roll container (1) is monitored using a detection device during the loading process.

20. Method according to any of claims 17 to 19, wherein the packages intended for the roll container (1) are sorted on the basis of object-specific features, such as a barcode or an address.

21. Method according to claim 20, comprising sorting the packages on the basis of a sorting plan, wherein the sorting plan comprises determination of a roll container sequence and early recognition of a maximum fill level of a roll container that is currently being filled being reached, wherein a further empty container is provided when a maximum fill level is imminent.

22. Method according to any of claims 17 to 21, further comprising the steps of:
acquiring data relating to the dimensions of the packages conveyed on the sorter;
determining whether the roll container (1) is full on the basis of the data relating to the packages loaded into the roll container (1).

## Revendications

1. Agencement pour l'introduction d'un conteneur roulant (1) dans un poste de chargement de conteneurs roulants (2) pour le remplissage du conteneur roulant (1) de colis triés dans une plateforme logistique, comportant un conteneur roulant (1) qui présente sur son côté supérieur une ouverture de chargement par l'intermédiaire de laquelle des colis ou autres articles à charger peuvent être chargés dans le conteneur, dans lequel le conteneur roulant est par exemple un conteneur d'expédition ou un conteneur intermédiaire, et comportant un poste de chargement de conteneurs roulants (2), dans lequel l'agencement présente un système de transport (3) pour le transport de conteneurs roulants (1), dans lequel le système de transport (3) relie un point de réception (4) pour des conteneurs roulants (1) vides au poste de chargement de conteneurs roulants (2), dans lequel le système de transport (3) présente une position finale pour des conteneurs roulants (1) transportés par le système de transport (3) dans une position de chargement (6) du conteneur roulant (1) à l'intérieur du poste de chargement de conteneurs roulants (2) et l'agencement présente un système de capteurs (5), **caractérisé en ce que** le système de capteurs (5) présente une caméra optique (8), dans lequel la caméra optique (8), laquelle est disposée dans la zone frontale (9) du poste de chargement de conteneurs roulants (2), ou le système de capteurs (5) présente un système de traitement d'images (11) qui est configuré pour déterminer, lorsqu'un conteneur roulant (1) est disposé dans la position de chargement à l'intérieur du poste de chargement de conteneurs roulants (2), au moins une distance relative entre le conteneur roulant (1) et au moins un point de référence à l'intérieur du poste de chargement de conteneurs roulants (2), dans lequel le point de référence est une limite intérieure d'un espace de réception de conteneurs roulants (12) du poste de chargement de conteneurs roulants.

2. Agencement selon la revendication 1, dans lequel la caméra optique (8) présente un axe optique (x) qui s'étend dans la direction verticale ou selon un angle aigu par rapport à la direction verticale.

3. Agencement selon l'une des revendications précédentes, dans lequel l'espace de réception de conteneurs roulants (12) présente une entrée (15) pour un conteneur roulant (1), dans lequel l'entrée (15) présente un rideau lumineux (16) qui est configuré pour détecter l'introduction d'un conteneur roulant (1) par l'entrée (15) dans l'espace de réception de conteneurs roulants (12).

4. Agencement selon la revendication 3, dans lequel le rideau lumineux (16) est configuré pour détecter l'introduction complète du conteneur roulant (1) par l'entrée (15) dans l'espace de réception de conteneurs roulants (12) et/ou pour balayer une géométrie extérieure du conteneur roulant (1) lors de l'introduction du conteneur roulant (1) par l'entrée (15) dans l'espace de réception de conteneurs roulants (12) et pour détecter ainsi de préférence au moins l'une parmi la hauteur, la largeur, la profondeur et la surface de contact du conteneur roulant (1).

5. Agencement selon l'une des revendications précédentes, dans lequel un espace de réception de conteneurs roulants (12) du poste de chargement de conteneurs roulants (2) présente au moins un élément de guidage mécanique, de préférence au moins un rail de guidage, avec lequel un conteneur roulant (1) est guidé lors de l'entrée dans l'espace de réception de conteneurs roulants (12) dans une position de chargement (6) du conteneur roulant (1) à l'intérieur du poste de chargement de conteneurs roulants (2).

6. Agencement selon la revendication 5, dans lequel le conteneur roulant (1), dans la position de chargement (6), s'appuie contre une butée avec laquelle est limité un mouvement du conteneur roulant (1) dans la direction d'insertion du conteneur roulant (1) par une entrée (15) de l'espace de réception de conteneurs roulants (12) dans l'espace de réception de conteneurs roulants (12).

7. Agencement selon l'une des revendications précédentes, dans lequel le système de transport (3) est ou présente un système de transport sans conducteur, dans lequel le système de transport sans conducteur est conçu pour recevoir un conteneur roulant (1) au niveau du point de réception (4) pour des conteneurs roulants (1) vides et pour l'introduire dans un espace de réception de conteneurs roulants (12) du poste de chargement de conteneurs roulants (2).

8. Agencement selon la revendication 7, dans lequel un accouplement mécanique entre le système de transport sans conducteur et le conteneur roulant (1) est réalisé par une liaison par friction et/ou par un mécanisme de levage et/ou par des contours de forme du système de transport sans conducteur et du conteneur roulant (1) venant en prise l'un dans l'autre.

9. Agencement selon la revendication 8, dans lequel le système de transport sans conducteur présente le système de capteurs (5), de préférence au moins une caméra optique (8), qui est configuré pour déterminer de manière continue ou périodique, lors de l'introduction du conteneur roulant (1) dans l'espace de réception de conteneurs roulants (12), une position relative du conteneur roulant (1) par rapport au poste de chargement de conteneurs roulants (2).

10. Agencement selon l'une des revendications précédentes, dans lequel l'environnement immédiat du poste de chargement de conteneurs roulants (2), de préférence au moins une zone d'entrée avant une entrée (15) dans un espace de réception de conteneurs roulants (12) du poste de chargement de conteneurs roulants (2), est surveillé par un dispositif de sécurité (17) pour détecter la présence de personnes ou d'objets.

11. Agencement selon la revendication 10, dans lequel l'entrée (15) de l'espace de réception de conteneurs roulants (12) est réalisée de manière à être ouverte en permanence et de préférence à être exempte d'élément de fermeture (18).

12. Procédé pour l'introduction d'un conteneur roulant (1) dans un poste de chargement de conteneurs roulants (2) avec un agencement selon l'une des revendications 1 à 11, dans lequel le conteneur roulant (1) est transporté avec le système de transport (3) entre le poste de réception (4) pour conteneurs roulants (1) vides et le poste de chargement de conteneurs roulants (2), **caractérisé par** la détermination d'une position relative du conteneur roulant (1) par rapport au poste de chargement de conteneurs roulants (2) au moyen du système de capteurs (5).

13. Procédé selon la revendication 12, dans lequel au moins une distance relative entre le conteneur roulant (1) et au moins un point de référence à l'intérieur du poste de chargement de conteneurs roulants (2) est déterminée avec le système de capteurs (5) dans une position de chargement (6) du conteneur roulant (1) à l'intérieur du poste de chargement de conteneurs roulants (2).

14. Procédé selon la revendication 12 ou 13, dans lequel l'introduction d'un conteneur roulant (1) par une entrée (15) dans un espace de réception de conteneurs roulants (12) est détectée par le fait que, lors de l'introduction du conteneur roulant (1) par l'entrée (15), un rideau lumineux (16) de l'entrée est franchi et donc interrompu, dans lequel, de préférence, l'introduction complète du conteneur roulant (1) par l'entrée (15) dans l'espace de réception de conteneurs roulants (12) est détectée avec le rideau lumineux (16) et/ou, lors de l'introduction du conteneur roulant (1) par l'entrée (15) dans l'espace de réception de conteneurs roulants (12), une géométrie extérieure du conteneur roulant (1) est balayée avec le rideau lumineux (16), dans lequel, de préférence, au moins l'une parmi la hauteur, la largeur, la profondeur et la surface de contact du conteneur roulant (1) est déterminée.

15. Procédé selon l'une des revendications 12 à 14, dans lequel un système de transport sans conducteur du système de transport (3) reçoit un conteneur roulant (1) au point de réception (4) pour conteneurs roulants (1) vides, le transporte depuis le point de réception (4) jusqu'au poste de chargement de conteneurs roulants (2) et l'introduit dans un espace de réception de conteneurs roulants (12) du poste de chargement de conteneurs roulants (2).

16. Procédé selon la revendication 15, dans lequel le système de capteurs (5) détermine de manière continue ou périodique, au moins lors de l'introduction du conteneur roulant (1) dans l'espace de réception de conteneurs roulants (12) avec le système de transport sans conducteur (3), une position relative du conteneur roulant (1) par rapport au poste de chargement de conteneurs roulants (2).

17. Procédé selon la revendication 15 ou 16, dans lequel, pendant un processus de chargement du conteneur roulant (1) avec des colis, soit
a. le conteneur roulant (1) à charger est maintenu dans une position inclinée par rapport à la verticale ou est pivoté de ladite position dans une position verticale, dans lequel la distance verticale entre une ouverture de remplissage du conteneur roulant (1) et un fond du conteneur roulant (1) est augmentée en continu ou progressivement, soit
b. un puits (25) réglable en hauteur du poste de chargement de conteneurs roulants (2) est rempli de colis de détail (200) triés et abaissé dans le conteneur roulant (1) à charger, et dans lequel les colis de détail (200) triés sont vidés hors du puits (25) dans le conteneur roulant (1) lorsque le puits (25) a atteint une position inférieure suite à l'abaissement, soit
c. un flux compact de colis de détail est acheminé par un convoyeur d'acheminement à un tronçon de convoyage d'un poste de collecte de colis de détail, à partir duquel les colis de détail (200) du flux de colis de détail sont dosés par un robot dans le conteneur roulant (1)
d. comprend le transfert de paquets d'une trieuse vers le conteneur roulant (1) par l'intermédiaire d'un poste terminal.

18. Procédé selon la revendication 17, dans lequel le système de transport sans conducteur (3) reste accouplé au conteneur roulant (1) pendant le processus de chargement si celui-ci n'est pas pivoté pendant le chargement, ou est séparé de celui-ci si le conteneur roulant (1) est pivoté pendant le processus de chargement.

19. Procédé selon l'une des revendications 17 ou 18, dans lequel le niveau de remplissage du conteneur roulant (1) est surveillé pendant le processus de chargement au moyen d'un dispositif de détection.

20. Procédé selon l'une des revendications 17 à 19, dans lequel le tri des paquets déterminés pour le conteneur roulant (1) est effectué sur la base de caractéristiques spécifiques à l'objet, comme par exemple un code à barres ou une adresse.

21. Procédé selon la revendication 20, comprenant le tri des paquets sur la base d'un plan de tri, dans lequel le plan de tri comprend la détermination d'un ordre de conteneurs roulants ainsi que la détection précoce de l'atteinte d'un niveau de remplissage maximal d'un conteneur roulant actuellement rempli, dans lequel un autre conteneur vide est mis à disposition lorsque le niveau de remplissage maximal se rapproche.

22. Procédé selon l'une des revendications 17 à 21, comprenant en outre les étapes consistant à :
détecter des données concernant les dimensions des paquets convoyés sur la trieuse ;
déterminer, à partir des données des paquets chargés dans le conteneur roulant (1), si le conteneur roulant (1) est rempli.
